# EUROPEAN PATENT SPECIFICATION

(11) **EP 3 518 349 B1**
(45) Date of publication and mention of the grant of the patent: **04.03.2020**
(21) Application number: 18153164.1
(22) Date of filing: 24.01.2018
(51) Int. Cl.: H01R 13/506, H01R 13/52, H01R 13/639, H01R 13/58

(54) **PROTECTIVE COVER ELEMENT AND WATERPROOF HOUSING FOR ELECTRICALLY FUNCTIONAL COMPONENTS**
SCHUTZABDECKUNGSELEMENT UND WASSERDICHTES GEHÄUSE FÜR ELEKTRISCHE FUNKTIONSKOMPONENTEN
ÉLÉMENT DE COUVERCLE DE PROTECTION ET BOÎTIER ÉTANCHE À L'EAU POUR COMPOSANTS ÉLECTRIQUEMENT FONCTIONNELS

(43) Date of publication of application: 31.07.2019
(73) Proprietor: FRIWO Gerätebau GmbH, 48346 Ostbevern (DE)
(72) Inventor: SUTTORP, Stefan, 59394 Nordkirchen (DE); JIANG, Weihua, Shenzhen, Guangdong 518101 (CN)
(74) Representative: Grünecker Patent- und Rechtsanwälte PartG mbB

(56) References cited:
- EP-A1- 2 144 336
- EP-A1- 2 418 744
- WO-A1-2005/122340
- DE-A1- 19 712 810
- JP-A- 11 067 329
- US-A1- 2016 020 551

## Description

The present invention relates to a cover element for protecting a lead-through of an electrical cable at a housing of an electronic component, to a waterproof housing arrangement for an electrical apparatus, to a waterproof power supply unit for supplying a consumer with low voltage, and to a corresponding method of assembling an electrical apparatus.

JP 11-067329 A addresses the problem to enhance vibration resistance and shock resistance. A resin cover is so installed as to wrap a wire led out from a female connector housing and thus a rubber plug is protected from high pressure cleaning water. The cover is divided into two along its axis, so as to make it openable. In its inside, an elastically holding part is so placed as to elastically pinch the wire. Thereby, the vibration of a vehicle transmitted to the wire is absorbed by the elastically holding part. Furthermore, even if a jumping stone has collided with the cover, the impact acting on the cover is absorbed by the elastically holding part as well, because a gap is maintained in between half covers.

WO 2005/122340 A1 relates to a connecting system for protecting the connection between a first coupling element at the end of a cable, for example an RJ 45 connector, and a mating second coupling element. The system comprises a protective housing having a cable passage through which the cable is led in a sealing manner, the first coupling element at the end of the cable being freely movable within the protective housing. The protective housing is provided with elements for the protected connection to a complementary housing around a second coupling element. The protective housing and/or the complementary housing can be housings for mains connections.

US 2016/020551 A1 relates to a housing for a contact device which can be fitted to a cable, having a first housing portion for receiving the contact device and a second housing portion which can be arranged on the first housing portion. The first housing portion has an inlet portion for the cable having a cable seal. The inlet portion of the first housing portion has a recess which exposes an outer part-region of the cable seal. The second housing portion can be arranged on the first housing portion in such a manner that the second housing portion can be pressed onto the outer part-region of the cable seal via the recess of the inlet portion of the first housing portion. This document further relates to an arrangement comprising a housing, a contact device and a cable.

EP 2 144 336 A1 relates to a hermetic two-pole or multipole electrical connector comprising a central engagement portion for at least two electrical terminals, from which a corresponding number of laterally adjacent tubular parts, at least one first male tubular part and at least one first female tubular part, protrude so as to surround the terminals, each one of the tubular parts being designed to mate with a corresponding tubular part of an associated similar electrical connection element. A hermetic containment and closure portion extends from the central portion for the segments for crimping the terminals to the respective electrical cables; the portion is formed by two half-shells hinged to the central portion.

DE 197 12 810 A1 relates to a cable plug arrangement. The cable plug arrangement includes a metallic casing which comprises a cable insertion for receiving the cable, an upper part, and fitting lower part. The lower part comprises at least one one-sided open channel in a first wall area parallel to the cable insertion, for recording an auxiliary wire. The channel comprises a deepening vertically to its direction for the recording of the free end of the auxiliary wire, and at least one guide device at the floor of the channel, between an open end and the deepening. The upper part comprises a rib in a first wall area working together with the first wall area of the lower part, with complementary devices for the guidance of the auxiliary wire, in such way, that the auxiliary wire is fixed in the channel at the assembly of the upper part and the lower part.

Power supply units supplying a consumer with a low voltage by transforming the supply voltage into the required low voltage by means of a voltage transformer are nowadays widely spread. It is necessary for certain applications, e.g. for charging outdoor equipment, that the power supply unit can be safely operated in moist environment. Here, the protection class IPx4, or even IPx7 has to be observed.

As is generally known, the so-called IP code (Ingress Protection) relates to the protection against splashing water all-around (IPx4) and the protection against temporary submersion (IPx7) according to the Standard DIN EN 60529 [DIN EN 60529:2014-09 (VDE 0470-1):2014-09 *Degrees of protection provided by enclosures (IP Code) (IEC 60529:1989* + *A1:1999* + *A2:2013); German version EN 60529:1991* +*A1:2000* +*A2:2013.* Beuth-Verlag, Berlin].

In order to seal a casing in accordance with protection class IPx7, it is known, on the one hand, to arrange the power input lead, the output lead, and all components of the power supply unit within a casing and to fill this casing completely with an electrically insulating casting resin. An alternative to such a complete filling is the sealing of the casing by means of an ultrasonic welding seam. However, the ultrasonic welding alternative is not as process-reliable as the complete filling because the tightness depends on the quality of the welding seam and can be subject to certain unacceptable fluctuations. Filling the plug-in power supply unit completely, on the other hand, has the disadvantage that the weight and the material expenditure are relatively high and, moreover, that the detection of causes of failure is rendered more difficult due to the fact that all of the components are inseparably enclosed by the casting resin.

Furthermore, it was realized by the inventors of the present application that the encapsulation of all of the components with a casting resin may lead to leakage currents between the electric components, causes problems with electromagnetic interference (EMI), and leads to undesirable acoustic phenomena.

Moreover, the inventors recognized that the most critical area that has to be protected against the intrusion of moisture is the lead-through for the primary sided cable which is to be connected with the mains voltage. This is of course also true for any other kind of cable lead-through.

The object underlying the present invention is to provide means for achieving a waterproof housing for an electrical apparatus, a power supply unit and an associated manufacturing method allowing, on the one hand, the observance of a protection class which is suited for the operation in a moist area and, on the other hand, a significant reduction of manufacturing costs and the complexity.

This object is solved by the subject matter of the independent claims. Advantageous embodiments of the present invention are the subject matter of the dependent claims.

The present invention is based on the idea that the necessary protection against intrusion of moisture at a lead-through of a housing can be achieved by providing an additional protective cover that is sealed against the housing in the one hand and against the cable on the other hand. By forming the cover element from two half shells, the cover element can be attached after all other components have been assembled. Thus, no time consuming resin casting steps are needed. Moreover, the cover element can be made removable, so that the cable may easily be removed and replaced if such maintenance is required.

In particular, according to the present invention, a cover element for protecting a lead-through of an electrical cable at a housing of an electrically functional component is provided, said cover element comprising a first half shell and a second half shell. The second half shell is attached to the first half shell by means of at least one locking element, so that said cover element encompasses said electrical cable and said lead-through at least partly. The cover element further comprises first sealing means for sealing an interface between the cover element and the cable, and second sealing means for sealing an interface between said cover element and the housing.

The cover element may for instance be formed from a plastic material, preferably the same material as the housing. However, it is clear for a person skilled in the art that any other material, also metal, may be used for forming the cover element. Moreover, the two half shells do not necessarily have to be formed from the same material. Although in the following the term "half shell" is used for the two separate parts of the cover element, it has to be noted that the shell do not literally have to cover exactly half of the circumference of the cable each. Also, the first and second half shells do not have to be of the same size. Finally, the cover element may also be constituted of more than two parts, at least one of the half shells being divided in separate portions.

According to an advantageous embodiment of the present invention, said at least one locking element comprises at least one snap hook arranged at said first or second half shell and a corresponding snap fit recess for interacting with the snap hook, the snap fit recess being arranged on the opposing second or first half shell. Such a snap fit connection has the advantage that it can be assembled fast and without requiring additional tools. Moreover, snap fit connections are mechanically stable and exert sufficiently strong forces in order to safely join the first and second half shells.

In order to allow for the cover element being removable, said snap fit recess comprises a cut free bridge which interacts with the snap hook being formed by an outwardly oriented cantilever snap hook. Due to this arrangement, the snap hook is accessible from the outside, so that the snap fit connection may be released and the cover element can be disassembled for removing the cable. This is advantageous for maintenance purposes. In particular, the locking element may be manually releasable, so that no additional tools needed for removing the cable. In this case even the consumer can perform the cable exchange and can purchase a new cable as a spare part.

According to the invention, the cover element comprises third sealing means for sealing a contact interface between said first and said second half shell. This has the advantage that no moisture can intrude into the cover element. Advantageously, at least one of the first to third sealing means comprises an elastic plastic material. For instance, a resilient silicone material can be used. According to the present invention, the sealing means are fabricated as separate silicone grommets. However, it is clear for a person skilled in the art that the resilient sealing means may also be integrally formed at the cover element a means of a multistage casting process.

According to an advantageous embodiment of the present invention, the cover element comprises a collar that extends inwardly toward a central longitudinal axis of the cover element, and is formed to engage with a mating groove at the housing for fixing the cover at the housing. Thereby, the cover element grips tightly to the housing and is therefore firmly attached thereto. Moreover, by securing the cover element to an outside part of the housing, the cover element may be attached after the housing is completely assembled. Furthermore, the housing is not impaired by removing the cover element and the cable.

Advantageously, said cover element comprises retention means for providing a traction relief for the electrical cable. Thus, the cable is not mechanically interlocked with the housing itself but is secured housing via the cover element. By securing the cable only to the cover element, the cable cannot be pulled out and disconnected from the electrically functional component as long as the cover element is in place, but may easily be removed after the cover element has been disengaged.

In order to avoid that the cable is bent over sharp edges and is kinked or damaged, the cover element comprises a funnel shaped cable inlet, and wherein said first sealing means is arranged at an inner end of the funnel.

The present invention further provides a waterproof housing arrangement for an electrical apparatus, the housing arrangement comprising a housing with at least one lead-through and a cover element according to one of the preceding claims.

According to an advantageous embodiment, the lead-trough is surrounded by an outwardly oriented flange forming said groove for engaging with said collar. In this manner, the flange and the collar interlock firmly with each other, thereby avoiding that the cable may be pulled out unintentionally. Moreover, the second sealing means may be arranged at a contact area between said outwardly oriented flange and said collar. This effectively prevents moisture from entering at the interface between the housing and the cover element.

Advantageously, the first sealing means is in sealing contact with a cable jacket, exerting radial forces on the cable jacket, and the first sealing means is further in sealing contact with a circumferential protrusion arranged at the cable for exerting axial pressure on the protrusion. This intimate contact improves the sealing between the cover element and the cable, so that no moisture can enter into the cover element at the interface between the cover element and the cable.

The cover element according to the present invention may efficiently be used with a power supply unit for supplying a consumer with low voltage, comprising a housing arrangement according to the present invention, an electric converter circuit for converting mains voltage from a power source into a lower output voltage, and the electrical cable, wherein the electrical cable is connectable to said power source and/or wherein said electrical cable is connected to said electronic converter circuit via a releasable plug connection.

The present invention further relates to a method of assembling an electrical apparatus, comprising the following steps:
providing a case body (also referred to as a housing) with an electrically functional component accommodated therein, the case body having at least one lead-through for leading an electrical cable that is connected to the electrically functional component to the outside of the case body,
inserting said cable into the lead-through in an insertion direction along a longitudinal axis of said case body, and electrically connecting the electrical cable to said electrically functional component,
attaching a cover element according to the present invention, wherein the first half shell and the second half shell are assembled in an assembly direction perpendicular to said longitudinal axis and jointed to encompass said electrical cable.

By mounting the first and second half shells in an assembly direction which is perpendicular to the longitudinal axis of the case body, a secure mechanical mounting can be achieved after the assembly of the electrically functional components is finished. The cable is secured at the housing only via the cover element, so that by removing the cover element also the cable becomes removable.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a perspective view of a lead-through at the housing of a power supply unit;
- **FIG. 2**: is a perspective partly exploded view of the housing of Fig. 1 with a water tight cover element according to the present invention;
- **FIG. 3**: is a perspective view of a first half shell of the water tight cover element according to the present invention;
- **FIG. 4**: is a perspective view of a second half shell of the water tight cover element according to the present invention;
- **FIG. 5**: is a sectional view of the power supply unit of Fig. 1;
- **FIG. 6**: is a detail of Fig. 5;
- **FIG. 7**: is another detail of Fig. 5;
- **FIG. 8**: is another perspective view of the housing of Fig. 1 with a water tight cover element according to the present invention;
- **FIG. 9**: is a perspective view of a top element of a housing for a power supply;
- **FIG. 10**: is a perspective view of a bottom element of the housing for a power supply;
- **FIG. 11**: is a sectional view of the bottom element shown in Fig. 10;
- **FIG. 12**: is a further sectional view of the bottom element shown in Fig. 10;
- **FIG 13**: is a top view of the bottom element shown in Fig. 10;
- **FIG 14**: is a side view of the bottom element shown in Fig. 10;
- **FIG 15**: is another side view of the bottom element shown in Fig. 10;
- **FIG 16**: is another side view of the bottom element shown in Fig. 10;
- **FIG 17**: is a bottom view of the bottom element shown in Fig. 10;
- **FIG. 18**: is a sectional view of the top element shown in Fig. 9;
- **FIG. 19**: is a further sectional view of the top element shown in Fig. 9;
- **FIG 20**: is a top view of the top element shown in Fig. 9;
- **FIG 21**: is a side view of the top element shown in Fig. 9;

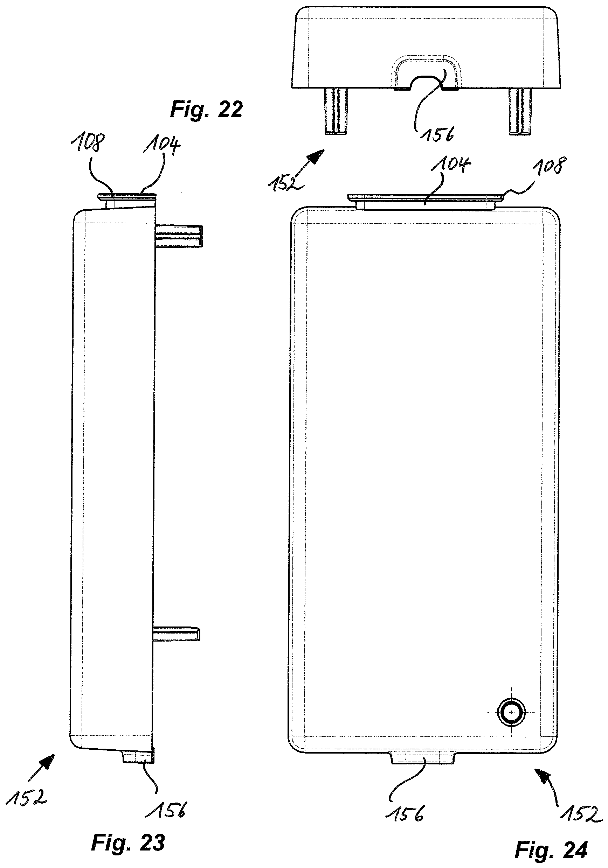

- **FIG 22**: is another side view of the top element shown in Fig. 9;
- **FIG 23**: is another side view of the top element shown in Fig. 9;
- **FIG 24**: is a bottom view of the top element shown in Fig. 9;
- **FIG 25**: is a first view of the lower half shell of the cover element shown in Fig. 2;
- **FIG 26**: is a second view of the lower half shell of the cover element shown in Fig. 2;
- **FIG 27**: is a third view of the lower half shell of the cover element shown in Fig. 2;
- **FIG 28**: is a first view of the upper half shell of the cover element shown in Fig. 2;
- **FIG 29**: is a second view of the upper half shell of the cover element shown in Fig. 2;
- **FIG 30**: is a third view of the upper half shell of the cover element shown in Fig. 2;
- **FIG. 31**: is a perspective view of a sealing element arranged at the first half shell of the water tight cover element;
- **FIG. 32**: is a perspective view of sealing elements arranged at the second half shell of the water tight cover element.

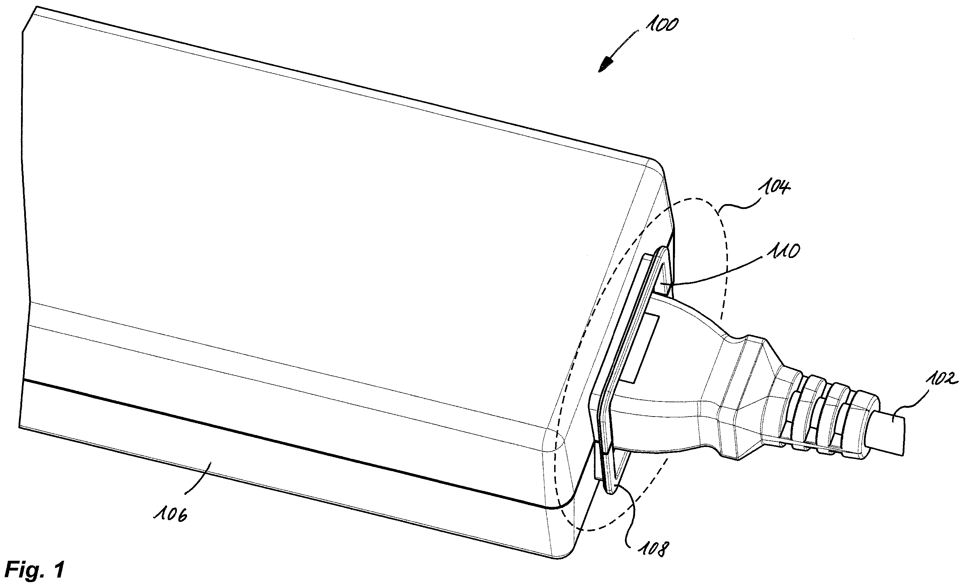

The present invention will now be explained in more detail with reference to the Figures and firstly referring to Fig. 1.

Fig. 1 shows a perspective view of a housing 100 and an electrical cable 102 which is passed through a lead-through 104 to the inside of the housing 100 in order to be connected with electrically functional components (not shown in the figures) arranged inside the housing 100. According to the present invention, the lead-through 104 is formed by an essentially rectangular opening 110 in the case body 106 of the housing 100.

The lead-through 104 comprises a flange 108 which surrounds the complete circumference of the opening 110. As shown in Fig. 1, the housing assembly with the cable connected to the electrically functional components inside the housing would not be sufficiently sealed against the intrusion of moisture at the interface between the housing 100 and the cable 102.

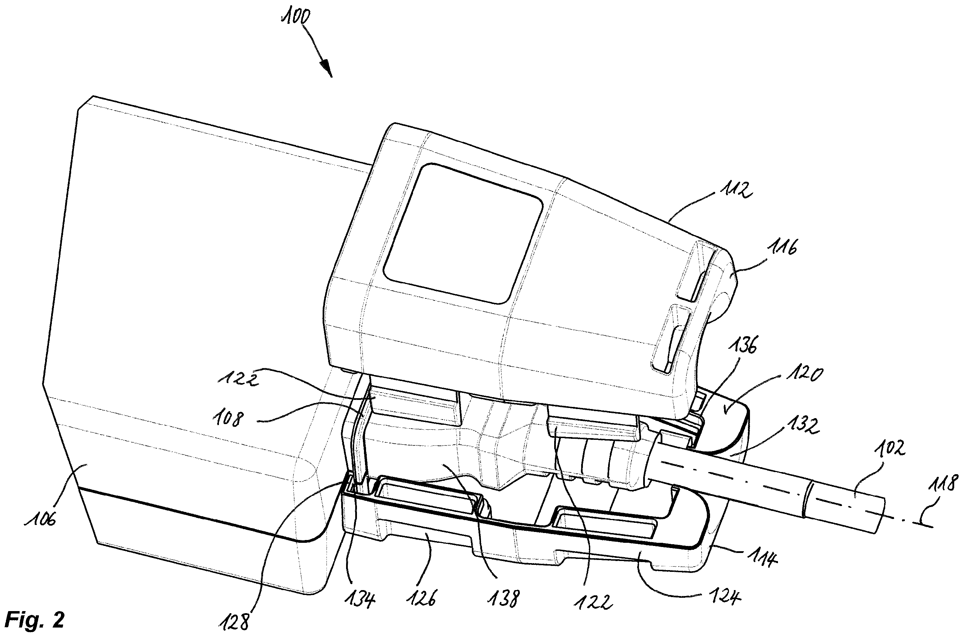

In order to solve this problem, the present invention proposes using a cover element 112 which is shown in detail in Fig. 2.

The cover element 112 comprises a first half shell 114 (which may also be referred to as a base) and a second half shell 116 (which may also be referred to as a cover). The first half shell 114 and the second half shell 116 are joined together in a joining region 120 which is oriented along the longitudinal axis 118 of the cable and the housing 100.

The second half shell comprises snap hooks 122 which lock the second half shell 116 at cut free bridges 124 which are provided at the first half shell 114. In the shown embodiment, four snap hooks 122 and four corresponding bridges 124 which form snap fit recesses 126 for interacting with the snap hooks are provided. However, it is clear for a person skilled in the art that any desired number of such locking elements can be provided. Advantageously, the snap fit recesses 126 are accessible from the outside, so that the snap fit hooks 122 can be pressed inwardly manually in order to loosen the connection between the first half shell 114 and the second half shell 116.

Moreover, as will be more apparent from the following drawings, the cover element 112 comprises a collar 128 which grips behind the flange 108 provided at the housing 100 for securing the cover element 112 at the housing 100.

Furthermore, first sealing means 130 are provided at a cable inlet 132 in order to seal the interface between the cable 102 and the inside of the cover element 112. Second sealing means 134 are arranged between the collar 128 and the flange 108 in order to seal the interface between the housing 100 and the cover element 112. Furthermore, third sealing means 136 are provided for sealing the interface between the first half shell 114 and the second half shell 116. Advantageously, all three sealing means are formed by a resilient material, such as silicone rubber. However, any other suitable soft material that is able to perform a watertight closure at the respective interfaces may be used as the sealing means.

According to the embodiment shown in the drawings, the cable 102 is terminated by a plug connector 138 which can be connected to the electrically functional components inside the housing 100. As will be more apparent from the following drawings, the cover element 112 comprises retention means that interact with the plug connector 138 so that same cannot be drawn out in the direction along the longitudinal axis 118, once the cover element 112 is firmly mounted at the flange 108.

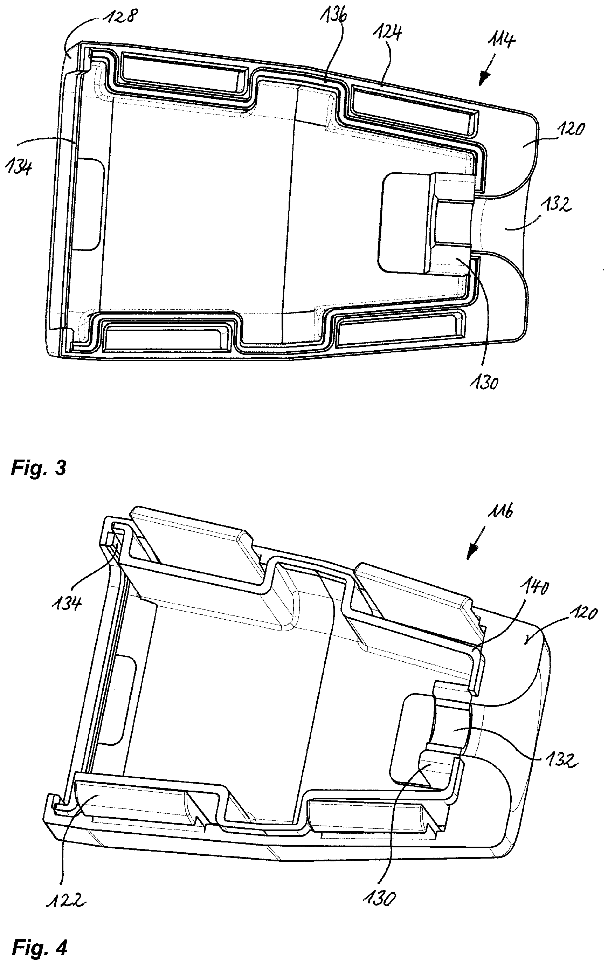

Figures 3 shows a perspective view of the first half shell 114 as can be seen from this Fig. the cable inlet 132 has a funnel shape with rounded edges in order to avoid damaging and/or kinking the cable 102. Moreover, a silicone seal 130 is arranged at the inner end of the funnel shaped cable inlet 132. An inwardly turned collar 128 is provided for interacting with the groove (also referred to as a slot) formed by the flange 108 at the housing 100 (as shown in Fig. 2). Second sealing means 134 are arranged at the inside of the color 128 in order to be pressed against the flange 108. The sealing means 134 is preferably a resilient silicone gasket.

For sealing the interface between the two adjoining half shells 114, 116 a third silicone gasket is provided which runs along the joining region 120. The second half shell 116 comprises matching protrusions 114 that are pressed onto the third sealing means 136.

Cut free bridges 124 form recesses 126 for interacting with the snap fit hooks 122 (see Fig. 2).

Fig. 4 shows a perspective view of the second half shell 116 of the cover element 112 seen from the inside. As already mentioned above, the second half shell 116 comprises protrusions 114 which are arranged along the joining region 124 compressing the gasket 136. Furthermore, first and second sealing means 130, 134 are arranged at the cable inlet 132 and at the collar 134, respectively.

Four cantilever snap hooks 122 are arranged outside the protrusions 140 and deflectable towards the central axis 118. Thereby, manual access to the snap hooks 122 from the outside is guaranteed, without impairing the watertightness of the cover element 112.

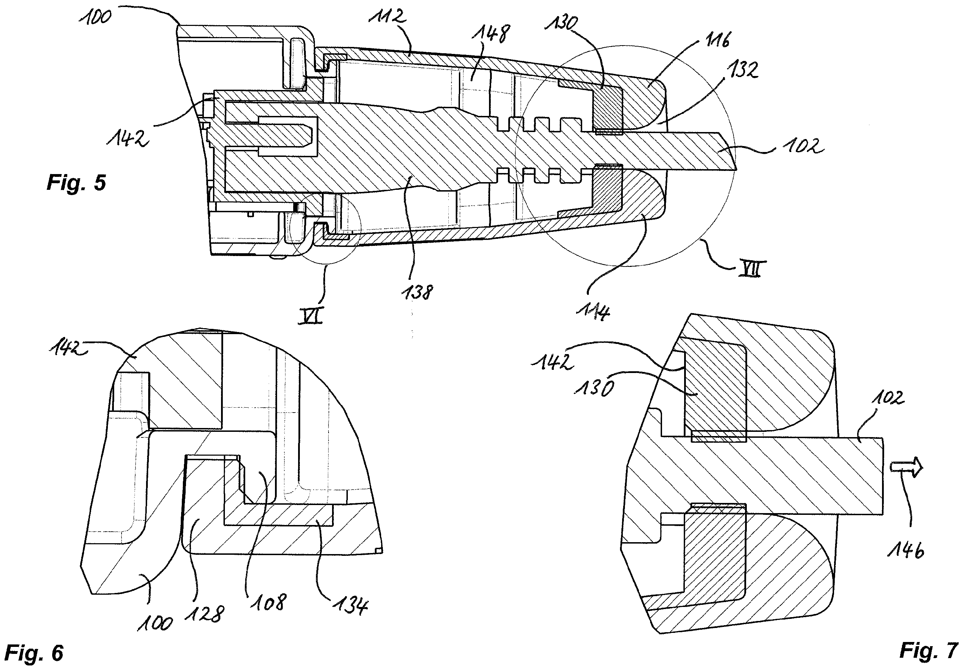

Figures 5 to 7 illustrate in a cut view some further details of the cover element 112 and the lead-through 104. As already mentioned above, the cable is terminated by a plug connector 138. As can be seen from Fig. 5, the plug connector 138 is connected to a mating connector 142 which is arranged inside the housing 104 for electrically contacting the electrically functional components inside the housing 100. As can be seen from Figures 5 and 6, the collar 128 grips into a groove formed by the flange 108 at the housing 100. At this interface, second sealing means 134 seal the interface between the collar 128 and the flange 108, so that the interface between the cover element 112 and the housing 100 is sealed watertightly. The soft material of the sealing means is interference fitting with the flange and the collar in order to achieve the watertightness.

As already mentioned above, the first sealing means 130 is provided at the inner end of the funnel shaped inlet 132. The first sealing means 130 is formed by two parts: one is arranged at the first half shell 114 and one is arranged at the second half shell 116. As can be seen from Fig. 5 together with the detail shown in Fig. 7, the first sealing means 130 forms a retention shoulder 142 for fixing the cable at corresponding protrusions 144 against being pulled in the direction 146. Furthermore, as can be seen from Fig. 5, the cover element 112 also comprises a retention groove 148 acting as an additional strain relief against pulling forces. In other words, the soft material of the sealing means interacts with the cable jacket in order not only to achieve waterproofness, but also to mechanically fix the cable and to prevent pulling out the cable.

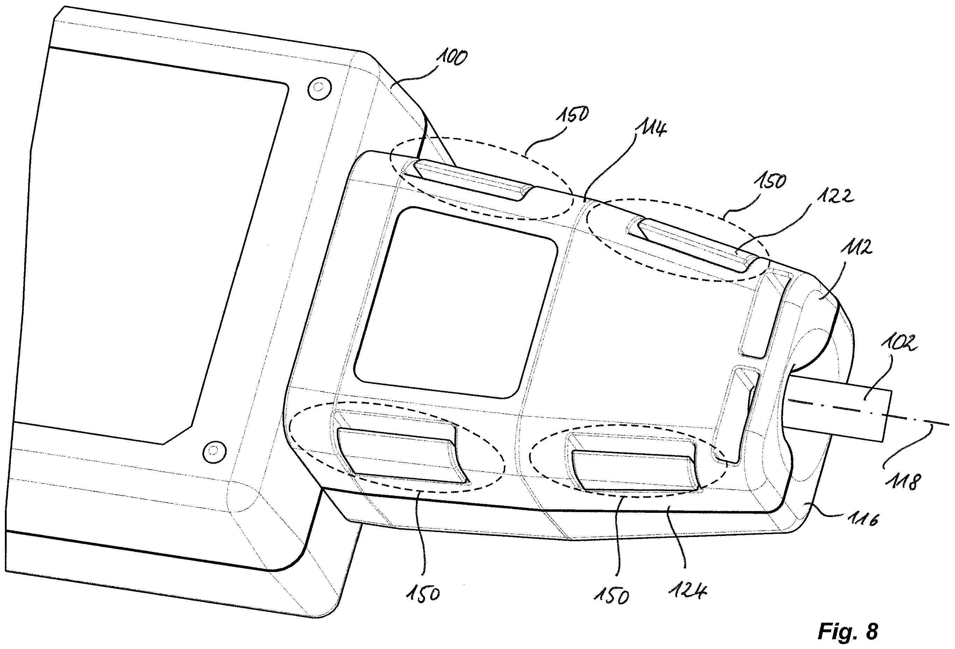

Fig. 8 shows a perspective view of the housing 100 with the mounted cover element 112 from the underside. As can be seen from this Figure, four snap lock connections 150 are formed by the snap fit hooks 122 being engaged with the cut free bridges 124. According to the present invention, each of the snap fit hooks 122 can be deflected towards the central axis 118, thereby loosening the grip against the cut free bridge 124 and allowing the first half shell 114 and the second half shell 116 to be separated from each other and to be removed from the cable 102 and the housing 100.

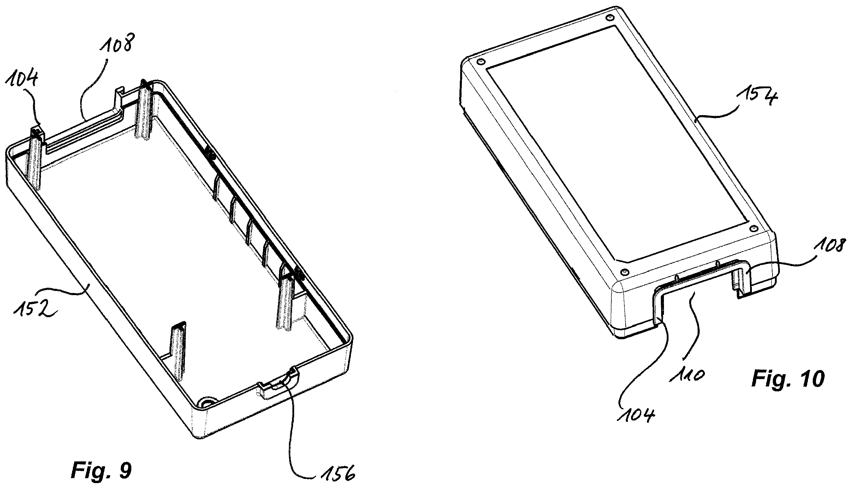

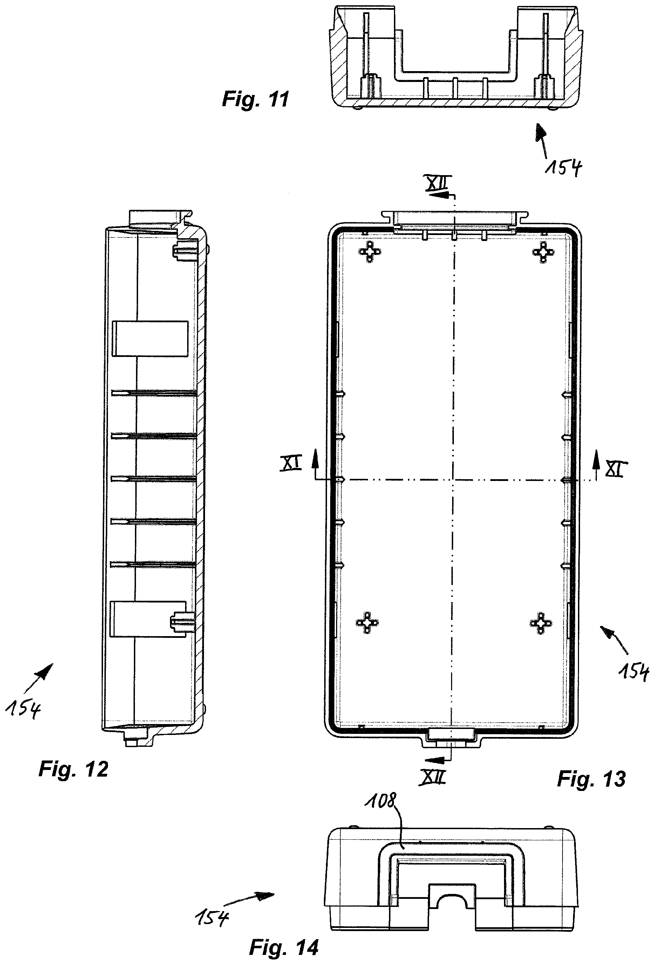

Figures 9 and 10 depict a top element 152 and a bottom element 154 of the housing 100, respectively. When being joined together, the top element 152 and the bottom element 154 form an essentially rectangular opening 110 which is surrounded by the flange 108. In order to seal the interface between the top element 152 and the bottom element 154, the two elements are welded together by laser welding. Alternatively, of course also gluing or a snap fit connection similar to the snap hooks 122 can be envisaged. At the side of the housing opposing to the lead through 104, a second lead-through 156 for attaching a low-voltage cable can be provided. As the low-voltage cable (not shown in the figures) is less critical regarding the electrical protection, a simple silicone seal at the inside of the second lead through 156 is sufficient for meeting the protection requirements. Figures 11 to 17 show several views of the bottom element 154 of the housing.

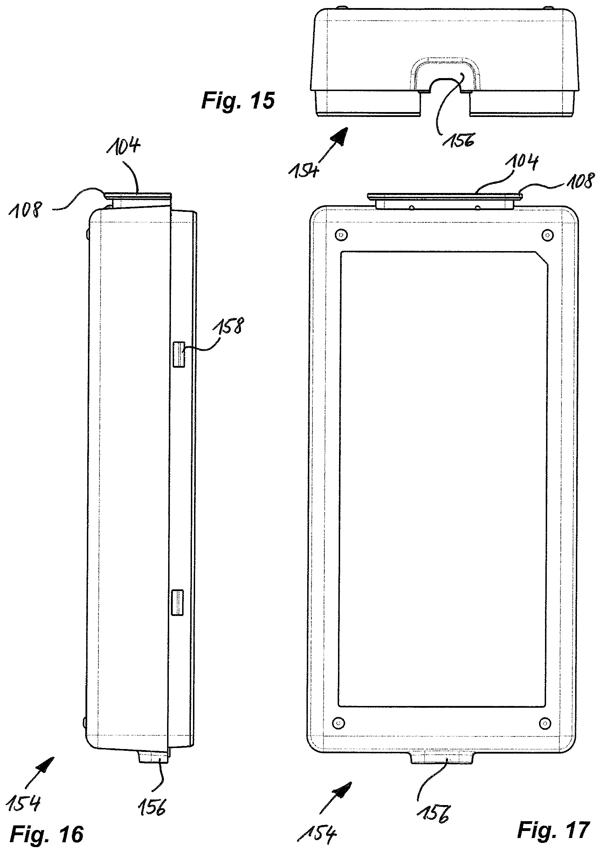

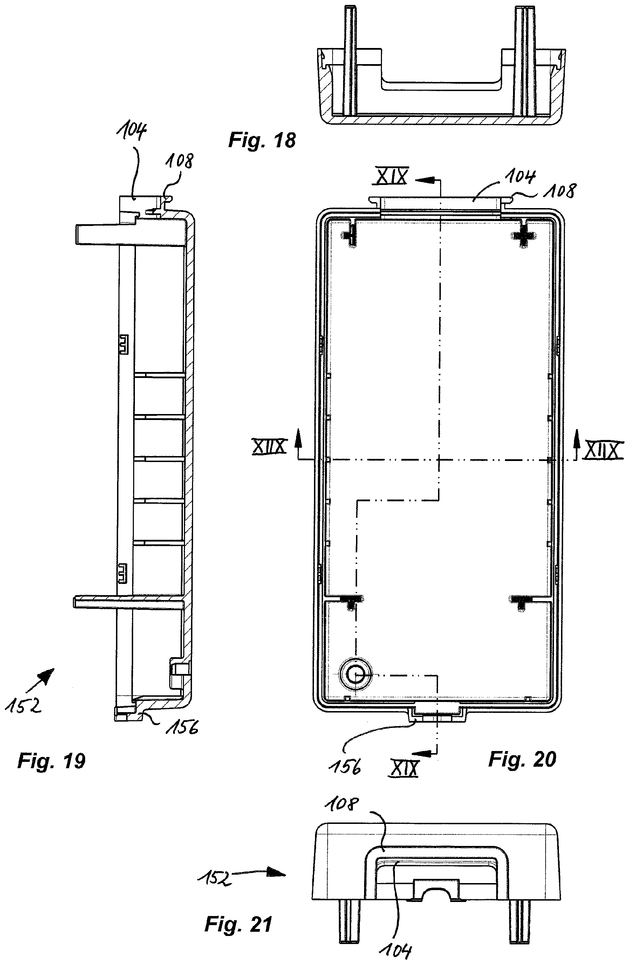

As can be seen from Fig. 16, the bottom element 154 comprises snap fit protrusions 158 for interacting with belonging snap fit recesses 160 at the top element 152 (see Fig. 19 below).

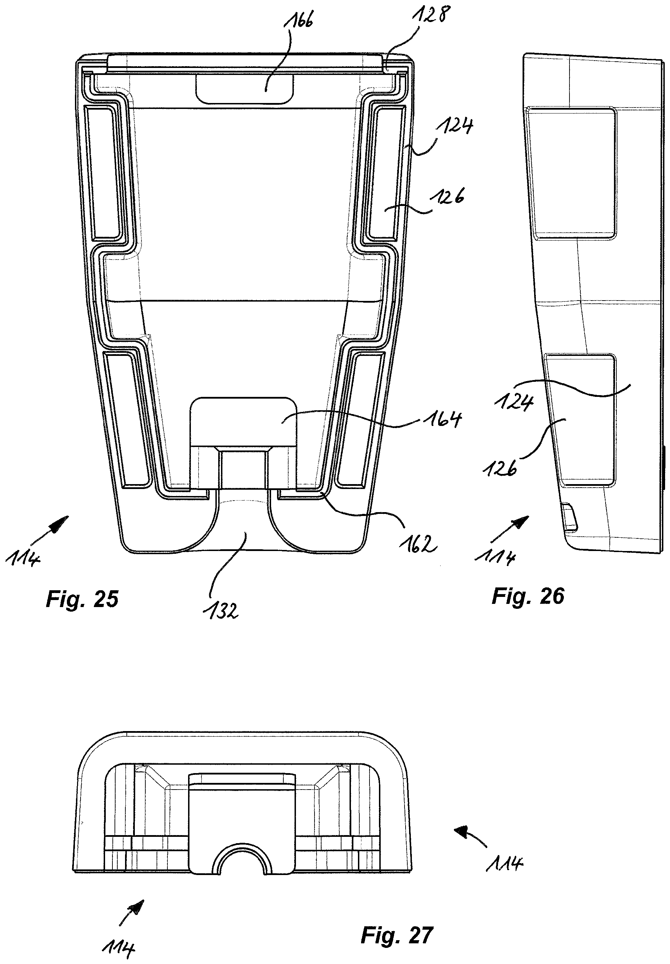

Fig. 25 to 27 show detailed views of the first half shell 114 of the cover element 112 according to the present invention. According to the present invention, the first half shell 114 comprises a notch 162 for mounting the third sealing means 136. Furthermore, first and second indentations 164, 166 are provided for anchoring the first and second sealing means 130, 134.

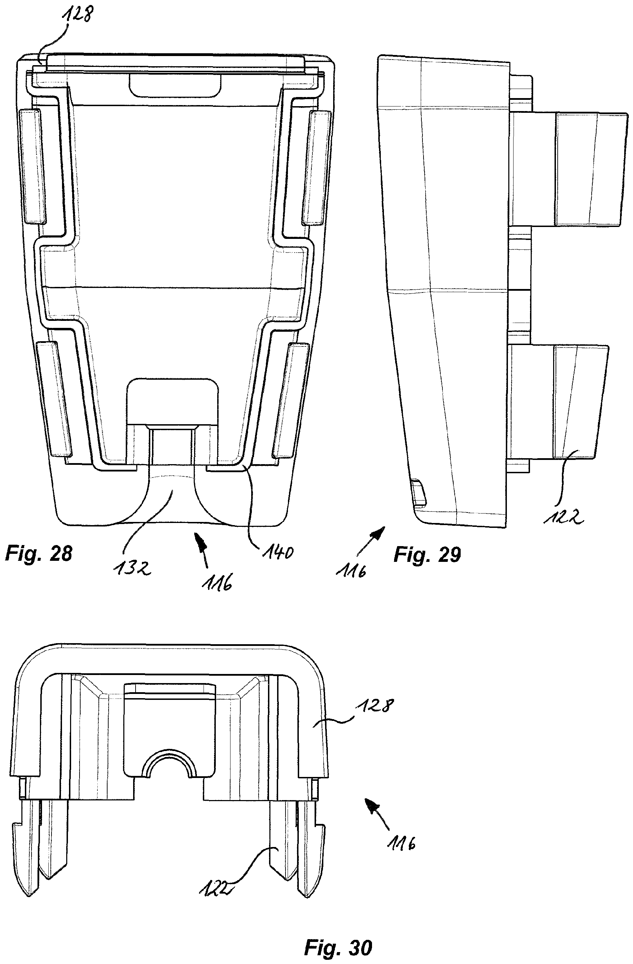

Figures 28 to 30 illustrate the second half shell 116. As can be seen from these Figures, the snap fit hooks 122 are formed to follow the outer contour of the first half shell 114, in order not to stick out from the smooth surface of the cover element 112.

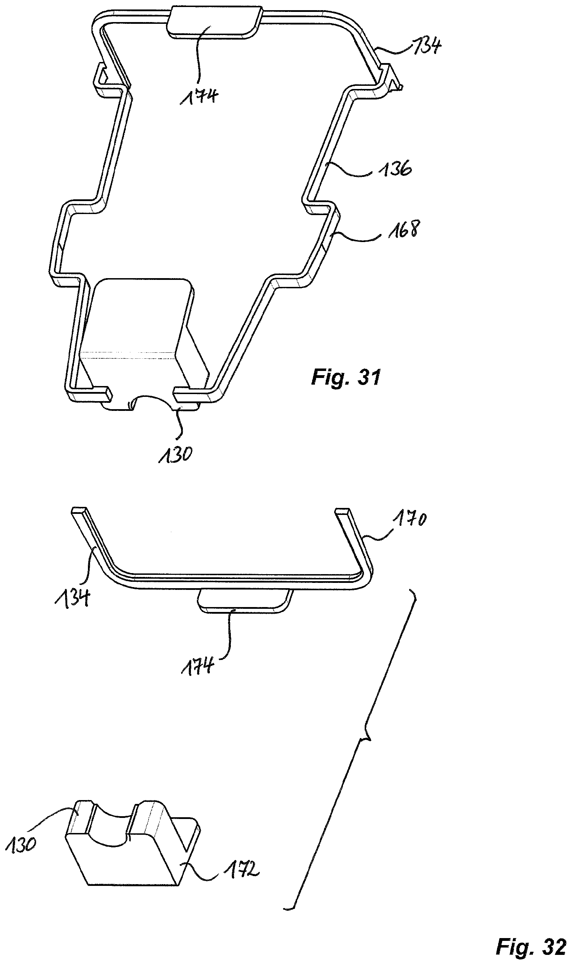

Figure 31 illustrates a silicone gasket part 168 that is attached to the first half shell 114, while Figure 32 illustrates two silicone gasket parts 170, 172 attached to the second half shell 116. As can be seen from these figures, each of the gasket parts has an anchoring pad 174 that fits into the indentations 164, 166, respectively.

According to the shown embodiment, the first half shell silicone gasket part 168 comprises half of the first sealing means 130 half of the second sealing means 134 and the third sealing means 136. The silicone gasket parts 170, 172 at the second half shell formed the other half of the second sealing means 134 and the first sealing means 130, respectively.

The silicone gasket parts 168, 170, 172 may either be provided as separate parts that are fabricated separately from the first and second half shell and are then fitted into the respective notch 162 and indentations 164, 166. Alternatively, the silicone gasket parts may also be fabricated integrally with the first and second half shell 114, 160 in a multi-stage casting process. Moreover, the distribution of the components of the sealing means into separate gasket parts may also the different from the arrangement shown in Figures 31 and 32.

In summary, the present invention provides a possibility of sealing a lead-through at the housing of an electrically functional component, for instance a power supply. Two parts of a protective cover are assembled together with the housing by means of a snap fit connection. The parts of the protective cover can be opened by releasing the snap fit connection. A soft material is provided at the parts of the protective cover for sealing. Moreover, the AC cable can be fixed by the protective cover during operation. Advantageously, the AC cable is exchangeable and is fixed and protected to prevent any incorrect operations.

**REFERENCE NUMERALS**

| **Reference Numeral** | **Description** |
|---|---|
| 100 | Housing |
| 102 | Electrical cable |
| 104 | Lead-throuqh |
| 106 | Case body |
| 108 | Flange |
| 110 | Opening |
| 112 | Cover element |
| 114 | First half shell |
| 116 | Second half shell |
| 118 | Longitudinal axis |
| 120 | Joining region |
| 122 | Snap fit hook |
| 124 | Cut free bridge |
| 126 | Snap fit recess |
| 128 | Collar |
| 130 | First sealing means |
| 132 | Cable inlet |
| 134 | Second sealing means |
| 136 | Third sealing means |
| 138 | Plug connector |
| 140 | Sealing protrusion |
| 142 | Retention shoulder |
| 144 | Protrusion at the electrical cable |
| 146 | Pulling direction |
| 148 | Retention groove |
| 150 | Snap lock connection |
| 152 | Top element of the housing |
| 154 | Bottom element of the housing |
| 156 | Second lead-through |
| 158 | Snap fit protrusions |
| 160 | Snap fit recesses at housing |
| 162 | Notch |
| 164 | First indentation |
| 166 | Second indentation |
| 168 | Silicone gasket part at first half shell |
| 170, 172 | Silicone gasket parts at second half shell |
| 174 | Anchoring pad |

## Claims

1. Cover element (112) for protecting a lead-through (104) of an electrical cable (102) at a housing (100) of an electronic component, said cover element (112) comprising:
a first half shell (114),
a second half shell (116), wherein said second half shell (116) is attached to the first half shell by means of at least one locking element, so that said cover element (112) encompasses said electrical cable (102) and said lead-through (104) at least partly,
first sealing means (130) for sealing an interface between the cover element (112) and the cable (102), and second sealing means (134) for sealing an interface between said cover element (112) and the housing (100),
wherein the first half shell (114) and the second half shell (116) are formed as separate parts and are joined together in a joining region (120) which is oriented along the longitudinal axis (118) of the cable and the housing (100), said cover element (112) further comprising third sealing means (136) for sealing a contact interface between said first and said second half shell (114, 116), **characterized in that** the third sealing means (136) runs along the joining region (120).

2. Cover element according to claim 1, wherein said at least one locking element comprises at least one snap hook (122) arranged at said first or second half shell (114, 116) and a corresponding snap fit recess (126) for interacting with the snap hook (122), the snap fit recess (126) being arranged on the opposing second or first half shell (116, 114).

3. Cover element according to claim 2, wherein said snap fit recess (126) comprises a cut free bridge (124) which interacts with the snap hook (122) being formed by an outwardly oriented cantilever snap hook.

4. Cover element according to one of the preceding claims, wherein said locking element is manually releasable.

5. Cover element according to one of the preceding claims, wherein at least one of the first to third sealing means (130, 134, 136) comprises an elastic plastic material.

6. Cover element according to one of the preceding claims, wherein said cover element (112) comprises a collar (128) that extends inwardly toward a central longitudinal axis (118) of the cover element (112), and is formed to engage with a mating groove at the housing (100) for fixing the cover element (112) at the housing (100).

7. Cover element according to one of the preceding claims, wherein said cover element (112) comprises retention means (130, 148) for providing a traction relief for the electrical cable (102).

8. Cover element according to one of the preceding claims, wherein said cover element (112) comprises a funnel shaped cable inlet (132), and wherein said first sealing means (130) is arranged at an inner end of the funnel shaped cable inlet (132).

9. Waterproof housing arrangement for an electrical apparatus, the housing arrangement comprising a housing (100) with at least one lead-through (104) and a cover element (112) according to one of the preceding claims.

10. Waterproof housing arrangement according to claim 9 and claim 6, wherein the lead-trough (104) is surrounded by an outwardly oriented flange (108) forming said groove for engaging with said collar (128).

11. Waterproof housing arrangement according to claim 10, wherein said second sealing means (134) is arranged at a contact area between said outwardly oriented flange (108) and said collar (128).

12. Waterproof housing arrangement according to one of the claims 9 to 11 wherein said first sealing means (130) is formed to be brought into sealing contact with a cable jacket, exerting radial forces on the cable jacket, and wherein the first sealing means (130) is further formed to be brought into sealing contact with a circumferential protrusion (144) arranged at the cable (102) for exerting axial pressure on the protrusion.

13. Waterproof power supply unit for supplying a consumer with low voltage, comprising a housing arrangement according to one of the claims 9 to 12, an electric converter circuit for converting mains voltage from a power source into a lower output voltage, and the electrical cable (102), wherein the electrical cable is connectable to said power source and/or wherein said electrical cable is connected to said electronic converter circuit via a releasable plug connection.

14. Method of assembling an electrical apparatus, comprising the following steps:
providing a housing (100) with an electrically functional component accommodated therein, the housing (100) having at least one lead-through (104) for leading an electrical cable (102) that is connected to the electrically functional component to the outside of the housing (100),
inserting said cable into the lead-through (104) in an insertion direction along a longitudinal axis (118) of said housing (100), and electrically connecting the electrical cable (102) to said electrically functional component,
attaching a cover element (112) according to one of the claims 1 to 8, wherein the first half shell (114) and the second half shell (116) are assembled in an assembly direction perpendicular to said longitudinal axis (118) and jointed to encompass said electrical cable (102).

## Patentansprüche

1. Abdeckelement (112) zum Schützen einer Durchführung (104) eines Stromkabels (102) an einem Gehäuse (100) einer elektronischen Komponente, wobei das Abdeckelement (112) umfasst:
eine erste Halbschale (114),
eine zweite Halbschale (116), wobei die zweite Halbschale (116) mittels wenigstens eines Verriegelungselementes so an der ersten Halbschale angebracht ist, dass das Abdeckelement (112) das Stromkabel (102) und die Durchführung (104) wenigstens teilweise umschließt,
eine erste Abdichteinrichtung (130) zum Abdichten einer Grenzfläche zwischen dem Abdeckelement (112) und dem Kabel (102) sowie eine zweite Abdichteinrichtung (134) zum Abdichten einer Grenzfläche zwischen dem Abdeckelement (112) und dem Gehäuse (100),
**wobei**
die erste Halbschale (114) und die zweite Halbschale (116) als separate Teile ausgebildet und in einem Verbindungsbereich (120) miteinander verbunden sind, der entlang der Längsachse (118) des Kabels und des Gehäuses (100) ausgerichtet ist, wobei das Abdeckelement (112) des Weiteren eine dritte Abdichteinrichtung (136) zum Abdichten einer Kontakt-Grenzfläche zwischen der ersten und der zweiten Halbschale (114, 116) umfasst, **dadurch gekennzeichnet, dass** die dritte Abdichteinrichtung (136) an dem Verbindungsbereich (120) entlang verläuft.

2. Abdeckelement nach Anspruch 1, wobei das wenigstens eine Verriegelungselement wenigstens einen an der ersten oder der zweiten Halbschale (114, 116) angeordneten Rasthaken (122) sowie eine entsprechende Einrast-Aussparung (126) zum Zusammenwirken mit dem Rasthaken (122) umfasst, wobei die Einrast-Aussparung (126) an der gegenüberliegenden zweiten oder ersten Halbschale (116, 114) angeordnet ist.

3. Abdeckelement nach Anspruch 2, wobei die Einrast-Aussparung (126) eine freigelegte Brücke (124) aufweist, die mit dem Rasthaken (122) zusammenwirkt, der durch einen nach außen gerichteten, Ausleger-Rasthaken gebildet wird.

4. Abdeckelement nach einem der vorangehenden Ansprüche, wobei das Verriegelungselement manuell entriegelt werden kann.

5. Abdeckelement nach einem der vorangehenden Ansprüche, wobei wenigstens eine von der ersten bis dritten Abdichteinrichtung (130, 134, 136) ein elastisches Kunststoffmaterial umfasst.

6. Abdeckelement nach einem der vorangehenden Ansprüche, wobei das Abdeckelement (112) einen Bund (128) umfasst, der sich nach innen auf eine Mittel-Längsachse (118) des Abdeckelementes (112) zu erstreckt und so ausgebildet ist, dass er mit einer Gegennut an dem Gehäuse (100) in Eingriff kommt, um das Abdeckelement (112) an dem Gehäuse (100) zu fixieren.

7. Abdeckelement nach einem der vorangehenden Ansprüche, wobei das Abdeckelement (112) Rückhalteeinrichtungen (130, 148) zum Erzeugen einer Zugentlastung für das elektrische Kabel (102) umfasst.

8. Abdeckelement nach einem der vorangehenden Ansprüche, wobei das Abdeckelement (112) eine trichterförmige Kabeleinführung (132) umfasst, und die erste Abdichteinrichtung (130) an einem inneren Ende der trichterförmigen Kabeleinführung (132) angeordnet ist.

9. Wasserdichte Gehäuseanordnung für eine elektrische Vorrichtung, wobei die Gehäuseanordnung ein Gehäuse (100) mit wenigstens einer Durchführung (104) sowie ein Abdeckelement (112) nach einem der vorangehenden Ansprüche umfasst.

10. Wasserdichte Gehäuseanordnung nach Anspruch 9 und Anspruch 6, wobei die Durchführung (104) von einem nach außen gerichteten Flansch (108) umgeben ist, der die Nut zum Eingreifen mit dem Bund (128) bildet.

11. Wasserdichte Gehäuseanordnung nach Anspruch 10, wobei die zweite Abdichteinrichtung (134) an einer Kontaktfläche zwischen dem nach außen gerichteten Flansch (108) und dem Bund (128) angeordnet ist.

12. Wasserdichte Gehäuseanordnung nach einem der Ansprüche 9 bis 11, wobei die erste Abdichteinrichtung (130) so ausgebildet ist, dass sie in abdichtenden Kontakt mit einem Kabelmantel gebracht wird und dabei radiale Kräfte auf den Kabelmantel ausübt, und die erste Abdichteinrichtung (130) des Weiteren so ausgebildet ist, dass sie in abdichtenden Kontakt mit einem an dem Kabel (102) angeordneten Umfangs-Vorsprung (144) gebracht wird und dabei einen axialen Druck auf den Vorsprung ausübt.

13. Wasserdichte Stromversorgungs-Einheit zum Versorgen eines Verbrauchers mit Niederspannung, die eine Gehäuseanordnung nach einem der Ansprüche 9 bis 12, eine elektrische Wandler-Schaltung zum Umwandeln von Netzspannung von einer Stromquelle in eine niedrigere Ausgangsspannung sowie das Stromkabel (102) umfasst, wobei das Stromkabel mit der Stromquelle verbunden werden kann und/oder das Stromkabel über eine lösbare Steckverbindung mit der elektronischen Wandler-Schaltung verbunden ist.

14. Verfahren zum Zusammenbauen einer elektrischen Vorrichtung, das die folgenden Schritte umfasst:
Bereitstellen eines Gehäuses (100) mit einer darin aufgenommenen elektrisch funktionalen Komponente, wobei das Gehäuse (100) wenigstens eine Durchführung (104) aufweist, mit der ein Stromkabel (102), das mit der elektrisch funktionalen Komponente verbunden ist, zur Außenseite des Gehäuses (100) geführt wird,
Einführen des Kabels in die Durchführung (104) in einer Einführrichtung entlang einer Längsachse (118) des Gehäuses (100) und elektrisches Verbinden des Stromkabels (102) mit der elektrisch funktionalen Komponente,
Anbringen eines Abdeckelementes (112) nach einem der Ansprüche 1 bis 8, wobei die erste Halbschale (114) und die zweite Halbschale (116) in einer Zusammensetz-Richtung senkrecht zu der Längsachse (118) so zusammengesetzt und verbunden werden, dass sie das Stromkabel (102) umschließen.

## Revendications

1. Élément couvercle (112) destiné à protéger une traversée (104) de câble électrique (102) au niveau d'un boîtier (100) d'un composant électronique, ledit élément couvercle (112) comprenant :
une première demi-coque (114),
une seconde demi-coque (116), dans lequel ladite seconde demi-coque (116) est attachée à la première demi-coque au moyen d'au moins un élément de verrouillage, de façon que ledit élément couvercle (112) enferme ledit câble électrique (102) et ladite traversée (104) au moins en partie,
un premier moyen d'étanchéité (130) pour rendre étanche une interface entre l'élément couvercle (112) et le câble (102) et un deuxième moyen d'étanchéité (134) pour rendre étanche une interface entre ledit élément couvercle (112) et le boîtier (100),
dans lequel
la première demi-coque (114) et la seconde demi-coque (116) sont formées en tant que pièces séparées et sont jointes l'une à l'autre dans une zone de jonction (120) qui est orientée le long de l'axe longitudinal (118) du câble et du boîtier (100),
ledit élément couvercle (112) comprenant, en outre, un troisième moyen d'étanchéité (136) pour rendre étanche une interface de contact entre lesdites première et seconde demi-coques (114, 116),
**caractérisé en ce que** le troisième moyen d'étanchéité (136) s'étend le long de la zone de jonction (120).

2. Élément couvercle selon la revendication 1, dans lequel ledit au moins un élément de verrouillage comprend au moins un crochet d'encliquetage (122) situé au niveau de ladite première ou seconde demi-coque (114, 116) et une cavité d'emboîtement par encliquetage (126) correspondante destinée à interagir avec le crochet d'encliquetage (122), la cavité d'emboîtement par encliquetage (126) étant située sur la seconde ou première demi-coque (116, 114) opposée.

3. Élément couvercle selon la revendication 2, dans lequel ladite cavité d'emboîtement par encliquetage (126) comprend un pont exempt de découpe (124) qui interagit avec le crochet d'encliquetage (122) qui est formé par un crochet d'encliquetage en porte-à-faux orienté vers l'extérieur.

4. Élément couvercle selon l'une des revendications précédentes, dans lequel ledit élément de verrouillage peut être déclenché manuellement.

5. Élément couvercle selon l'une des revendications précédentes, dans lequel au moins un des premier à troisième moyens d'étanchéité (130, 134, 136) comprend un matériau plastique élastique.

6. Élément couvercle selon l'une des revendications précédentes, dans lequel ledit élément couvercle (112) comprend un collet (128) qui s'étend vers l'intérieur en direction d'un axe longitudinal central (118) de l'élément couvercle (112) et a une forme permettant de se mettre en prise avec une rainure correspondante au niveau du boîtier (100) pour fixer l'élément couvercle (112) au niveau du boîtier (100).

7. Élément couvercle selon l'une des revendications précédentes, dans lequel ledit élément couvercle (112) comprend un moyen de retenue (130, 148) destiné à soulager la traction sur le câble électrique (102)

8. Élément couvercle selon l'une des revendications précédentes, dans lequel ledit élément couvercle (112) comprend une entrée de câble (132) en forme d'entonnoir, et dans lequel ledit premier moyen d'étanchéité (130) est situé au niveau d'une extrémité intérieure de l'entrée de câble (132) en forme d'entonnoir.

9. Agencement de boîtier étanche à l'eau pour appareil électrique, l'agencement de boîtier comprenant un boîtier (100) pourvu d'au moins une traversée (104) et un élément couvercle (112) selon l'une des revendications précédentes.

10. Agencement de boîtier étanche à l'eau selon la revendication 9 et la revendication 6, dans lequel la traversée (104) est entourée par une bride (108) orientée vers l'extérieur qui forme ladite rainure destinée à la mise en prise avec ledit collet (128).

11. Agencement de boîtier étanche à l'eau selon la revendication 10, dans lequel ledit deuxième moyen d'étanchéité (134) est situé au niveau d'une zone de contact entre ladite bride (108) orientée vers l'extérieur et ledit collet (128).

12. Agencement de boîtier étanche à l'eau selon l'une des revendications 9 à 11, dans lequel ledit premier moyen d'étanchéité (130) a une forme destinée à être mise en contact étanche avec une gaine de câble, en exerçant des forces radiales sur la gaine de câble, et dans lequel le premier moyen d'étanchéité (130) a, en outre, une forme destinée à être mise en contact étanche avec une saillie circonférentielle (144) située au niveau du câble (102) pour exercer une pression axiale sur la saillie.

13. Bloc d'alimentation électrique étanche à l'eau destiné à l'alimentation d'un consommateur en basse tension, comprenant un agencement de boîtier selon l'une des revendications 9 à 12, un circuit de conversion électrique permettant de convertir la tension de secteur d'une source de courant en une tension de sortie plus basse, et le câble électrique (102), dans lequel le câble électrique peut être connecté à ladite source de courant et/ou dans lequel ledit câble électrique est connecté audit circuit de conversion électronique par le biais d'une connexion à fiche détachable.

14. Procédé d'assemblage d'un appareil électrique, comprenant les étapes suivantes :
prendre un boîtier (100) dans lequel est logé un composant électriquement fonctionnel, le boîtier (100) comportant au moins une traversée (104) pour faire passer un câble électrique (102) qui est connecté au composant électriquement fonctionnel sur l'extérieur du boîtier (100),
insérer ledit câble dans la traversée (104) dans une direction d'insertion le long d'un axe longitudinal (118) dudit boîtier (100), et connecter électriquement le câble électrique (102) audit composant électriquement fonctionnel,
fixer un élément couvercle (112) selon l'une des revendications 1 à 8, dans lequel la première demi-coque (114) et la seconde demi-coque (116) sont assemblées dans une direction d'assemblage perpendiculaire audit axe longitudinal (18) et jointes pour enfermer ledit câble électrique (102).
